# EUROPEAN PATENT SPECIFICATION

(11) **EP 1 231 805 B1**
(45) Date of publication and mention of the grant of the patent: **20.07.2005**
(21) Application number: 01306908.3
(22) Date of filing: 14.08.2001
(51) Int. Cl.: H04Q 7/38

(54) **System and method for performing inter-layer handoff in a hierarchical cellular system**
System und Verfahren zur Durchführung von Handoff zwischen Schichten eines hierarchischen zellularen Systems
Système et procédé de transfert intercellulaire entre couches d'un système cellulaire hiérarchique

(30) Priority: 31.01.2001 US 773175
(43) Date of publication of application: 14.08.2002
(73) Proprietor: LUCENT TECHNOLOGIES INC., Murray Hill, New Jersey 07974-0636 (US)
(72) Inventor: Newbury, Mark E., Belle Mead, New Jersey 08502 (US); Vitebsky, Stanley, Parsippany, New Jersey 07054 (US)
(74) Representative: Sarup, David Alexander

(56) References cited:
- EP-A- 0 660 635
- EP-A- 0 692 920
- EP-A- 0 701 382

## Description

This invention relates to methods of, and inter-layer handoff systems for communicating in a hierarchical cellular system.

A typical cellular communications system provides wireless communications service to a number of wireless or mobile units situated within a geographic region. The geographic region serviced by the cellular communications system is divided into spatially distinct areas called "cells." A conventional cellular communications system comprises a number of cell sites or base stations geographically distributed to support transmission and receipt of communication signals to and from the mobile units or wireless units. Each base station handles voice communications over a cell, and the overall coverage area for the cellular communications system is defined by the union of cells for all of the base stations, where the coverage areas for nearby base stations overlap to some degree to ensure (if possible) contiguous communications coverage within the outer boundaries of the system's coverage area.

As the demand for wireless service increases, techniques can be used to increase the capacity of the cellular system. For example, a hierarchical or overlay cellular system can be used where a network or layer of smaller sized cells are installed over the network or layer of larger cells. Using the smaller-sized cells increases capacity by increasing the number of radio channels servicing the geographic area. In a hierarchical cellular system, the majority of the traffic is serviced on the network or layers of smaller-sized cells, but if the wireless unit is moving rapidly, thereby requiring numerous handoffs in the smaller cell network, the wireless unit is placed on the network or layer of larger-sized cells.

EP-A-0701382 relates generally to a control method for a cellular communications system that uses mobility and teletraffic statistic collected by mobile units to provide control of cellular communication. In particular, the mobile units process or collect statistics and then transmit the aggregate statistics to a microcell or macrocell base station. The statistics that are monitored by the mobile unit include cell sojourn time. The aggregate statistics are utilized by base stations of the microcells or macrocells to assign new and hand off calls to a microcell or macrocell, to prioritize call handling within the cellular communication system and to assign customized customer service areas for the mobile units. The processing and collecting of the statistics in the mobile units requires processing power that could otherwise be used to provide additional functionality and signal processing by the mobile units. Further, this processing requires additional battery power and thereby reduces the life of a charged mobile unit battery (e.g., less talk time).

EP-A-0660635 relates generally to a handover method in mobile communication systems. In particular, the size of a particular radio zone to be assigned to a mobile unit is selected based on the number of handovers in the mobile units. The mobile switching center measures the number of handovers in each of the mobile units and assigns, during a mobile unit handover, a handover target radio zone based on the measured value of the number of handovers. Predetermined threshold values are used to define the radio zones.

EP-A-0692920 relates generally to a control method for selecting and reselecting cells in a multilayer cellular mobile radio network. In particular, the reselection of cells is performed during a pre-determined time-delay based upon the cumulative counting of the number of cells reselected in the layer during that time-delay. Specifically, the cumulative number is compared with two thresholds to determine the reselection. The mobile station uses the comparison to select the layer in which the cells have the most appropriate size to the speed of the mobile station.

According to one aspect of this invention there is provided a method as claimed in claim 1.

According to another aspect of this invention there is provided an inter-layer handoff system as claimed in claim 12.

To take advantage of hierarchical cell layers, an inter-layer handoff system determines a cell layer for servicing a wireless unit at least as a function of the duration that the wireless unit is in a cell or set of cells of a cell layer. For example, as a function of the duration that the wireless unit is in the cell or set of cells for a first cell layer, a determination is made as to whether the wireless unit should be serviced by a cell or set of cells of a second cell layer As such, wireless units moving at higher speeds which will be handed off frequently in a smaller cell layer(s) are serviced by a larger cell layer(s). Thus, the hierarchical cellular communications system can have the increased capacity provided by the smaller cell layer(s) while reducing the number of handoffs which would occur of the faster moving wireless units in the smaller cell layer(s). In certain embodiments, a timer starts when the wireless unit connects to a cell in a first layer, and the timer stops when the wireless unit disconnects from the cell. Depending on the amount of time that the wireless unit is in the cell of the first layer or a function thereof, the inter-layer handoff system determines whether the wireless unit should be serviced by another cell layer. For example, the network can compare a timer value(s) or a function thereof with threshold value(s) which are chosen such that the frequency of handoffs are below a certain level at each cell layer.

### BRIEF DESCRIPTION OF THE DRAWINGS

Other aspects and advantages of the present invention may become apparent upon reading the following detailed description and upon reference to the drawings in which:
FIG. 1 shows a general diagram of a hierarchical cellular communications system in which the inter-layer handoff system embodying the present invention can be used, and
FIG. 2 shows a general flow diagram for an embodiment of an inter-layer handoff system embodying the present invention.

### DESCRIPTION

Illustrative embodiments of the inter-layer handoff control system are described with respect to a hierarchical cellular system having cell layers of different size cells overlaid over at least portions of the same geographic service area

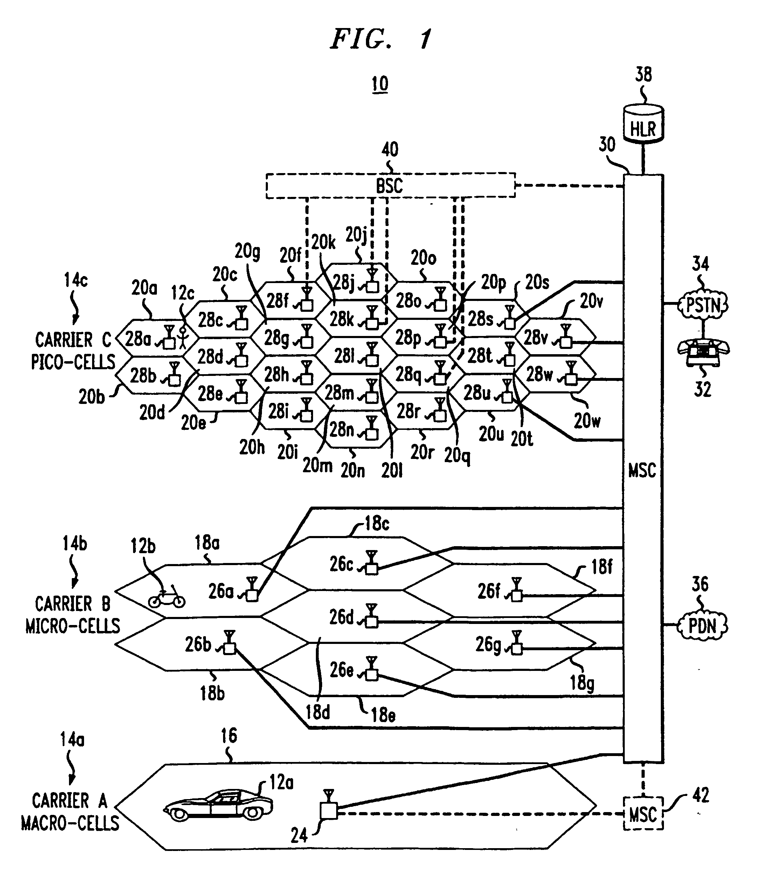

FIG 1 depicts a diagram of a portion of a hierarchical cellular communications system 10, which provides wireless communications service to a number of wireless or mobile units 12a-c, that are situated within the geographic service area of the system 10 The geographic region serviced by the cellular communications system is divided into spatially distinct areas called "cells " In the geographic service area of the hierarchical system 10, the wireless unit 12a is serviced by a macro-cell layer 14a of macro-cell(s) 16 through a cell site or base station 24. A micro-cell layer 14b of micro-cells 18a-g is overlaid on the macro-cell layer 14a The micro-cell layer 14b provides service through cell sites or base stations 26a-g to wireless units in at least a portion of the same geographic service area serviced by the macro-cell layer 14a For example, the wireless unit 12b is being serviced by the micro-cell layer 14b through the base station 26a in the micro-cell 18a Finally, a pico-cell layer 14c of pico-cells 20a-w is overlaid on the micro-cell layer 14b and provides service through cell sites or base stations 28a-w to wireless units in at least a portion of the same geographic service area serviced by the micro-cell layer 14b. For example, the wireless unit 12c is being serviced by the pico-cell layer 14c through the base station 28a in the micro-cell 20a

A base station comprises the radios and antennas that the base station uses to communicate with the wireless units in the corresponding cell The base station and a wireless unit communicate voice and/or data over a forward link and a reverse link, wherein the forward link carries communication signals over at least one forward channel from the base station to the wireless unit and the reverse link carries communication signals on at least one reverse channel from the wireless unit to the base station. There are many different schemes for defining forward and reverse link channels for a cellular telephone system, including TDMA (time-division multiple access), FDMA (frequency-division multiple access or AMPS), and CDMA (code-division multiple access) schemes.

The base station also comprises the transmission equipment that the base station uses to communicate with a Mobile Switching Center (MSC) 30 The Mobile Switching Center 30 is responsible for, among other things, establishing and maintaining calls between the wireless units, calls between a wireless unit and a wireline unit (e.g., wireline unit 32) via a public switched telephone network (PSTN) 34 connected to the MSC 30 and connections between the wireless units and a packet data network 36 In certain embodiments, the MSC 30 is connected to a plurality of base stations that are dispersed throughout the geographic region serviced by the MSC 30 and to the PSTN 34 and/or the packet data network (PDN) 36, such as the Internet. The MSC 30 is connected to several databases, including a home location register (HLR) 38 containing subscriber information and location information for all wireless units which reside in the geographic region of the MSC 30. A typical base station comprises a base station controller (BSC) which administers the radio resources for the base station and relays information to the MSC. Depending on the embodiment, the BSC can be a separate base station controller (BSC) 40 connected to several base stations in a cell layer or in different cell layers which administers the radio resources for the base stations and relays information to the MSC 30. Additionally, depending on the embodiment, a separate MSC 42 can handle different cell layers in the hierarchical cell structure.

Within a cell layer in a hierarchical cellular system using TDMA or AMPS, when a wireless unit is experiencing poor voice/data quality and is close to being dropped, the wireless unit is handed off to another cell site or base station in the cell layer that can better service the call. The MSC 30 switches a call between base stations in real time as the wireless unit 12 moves between cells, referred to as a hard handoff. In CDMA communications, the wireless unit searches for pilot signals of base stations on an active set, a candidate set and a neighbor set. The active set is the set of base stations through which active communications is established. The neighbor set is the set of base stations surrounding an active base station having some probability of having a signal strength of sufficient level to establish communications, and the candidate set is a set of base stations having a pilot signal strength at a sufficient level to establish communication with the wireless unit with a probability close to the active set.

The wireless unit measures the signal strengths of the pilot signals and provides the pilot signal measurements in a pilot strength measurement message (PSMM) to the wireless communications system through a serving base station. The wireless unit determines which base stations are in the candidate set based on the pilot signal strength measurements. The wireless unit sends the pilot signal measurements for the candidate and active base stations in the PSMM When a pilot signal of a base station in the neighbor set exceeds a predetermined threshold level, the base station is added to the candidate set. When the wireless unit detects a pilot of sufficient strength which is associated with a base station in the candidate set, the wireless communications system determines whether to update the active set and assign a traffic channel from the base station to the wireless unit. The wireless unit is said to be in soft handoff if it is assigned traffic channels from more than one base station. A handoff can refer to when the base station(s) in the active set and/or in selected or current cell layer(s) changes or changes in a certain way.

In the hierarchical cellular system of FIG. 1, each cell layer 14a-c can operate independent of the other cell layers 14a-c. For example, if the hierarchical cellular system 10 uses TDMA or AMPS, each cell layer 14a-c can use its own set of frequencies with its own frequency reuse plan. In CDMA communications, different channels are distinguished by different spreading sequences that are used to encode different voice-based streams, which may then be modulated on the same carrier frequency for simultaneous transmission. A receiver can recover a particular voice-based stream from a received signal using the appropriate spreading sequence to decode the received signal. If the hierarchical cellular system 10 uses CDMA communications, each cell layer 14a-c can use a different carrier frequency, such as carrier A for the macro-cell layer 14a, carrier B for the micro-cell layer 14b and carrier C for the pico-cell layer 14c. In alternative embodiments, different cell layers could use different schemes for defining communications channels. For example, cell layer 14a could use AMPS while cell layer 14b could use CDMA. Depending on the embodiment, a wireless unit could be in soft handoff with base stations of different cell layers 14a-c.

The hierarchical cellular system increases capacity by increasing the number of radio channels servicing the geographic area. In a hierarchical cellular system employing frequency reuse, such as in TDMA, GSM or AMPS, the frequencies are split between the different cell layers. The overall traffic density is greater because 1) the overlay (smaller cell layer(s)) is dense and 2) the overlay enjoys proportionately higher reuse than the underlay (larger cell layer(s)). Additionally, the layer(s) of smaller cells can enjoy a better frequency reuse than the layers(s) of larger cells because of local conditions, such as buildings, and the low/directional micro-cell power reduces the co-channel interference problem. In a CDMA system, the traffic density is also increased, but this increase is due to the higher density of cells not typically due to the frequency reuse.

When a wireless unit attempts to access the hierarchical cell system, an initial determination is made as to which cell layer is to service a wireless unit. This determination can be made in different ways. The initial cell layer can be established based on previous usage pattern for the wireless unit, on the traffic load of the different layers, using a predetermined layer, and/or at subscription. For example, a wireless unit with a history of being handed off to macro-cell layers may be initially put in a macro-cell layer. Alternatively, a layer having the smallest, the largest or intermediate size cells could be selected as the default access layer, or the default access layer could depend on characteristics of the particular wireless unit and/or of the different layers For example, wireless units capable of using new technology or certain communications systems may access on smaller size cell layers while older model wireless units can access on larger size cell layers.

Once the wireless unit has access to the hierarchical cellular system, the inter-layer handoff system determines whether to perform an intra-layer hand-off as the wireless unit travels through the geographic service area. Fast traffic should be on a layer of larger cells, and slower traffic should be on a layer of smaller cells If fast traffic gets on a layer of smaller cells, the wireless unit can be dropped because the intra-layer hand-offs cannot happen rapidly enough as the wireless unit travels through the small cells. Conversely, if slow traffic gets on a layer of larger cells, the increased capacity provided by the smaller size cell layers is being wasted.

Accordingly, in order to take advantage of the hierarchical cellular structure, the wireless units must be directed to the appropriate cell layer depending on the speed of travel. For example a wireless unit 12a on a highway would stay on the macro layer 14a but be handed off to the micro layer 14b upon exiting the highway and entering a downtown area. In contrast, the wireless unit 12a returning to the highway could not remain on the micro layer 14b because the wireless unit speed would make hand-offs between micro-cells (intra-cell layer hand-offs) difficult at best.

In the hierarchical cellular system 10, the traffic should be directed to the pico-cellular network or pico-cell layer 14c to take full advantage of the increased capacity of the pico-cellular network. However, if the wireless unit is moving at a rate which requires numerous handoffs in the pico-cellular network, thereby requiring increased processing and potentially dropped calls, the wireless unit can be placed on the micro-cellular network or micro-cell layer 14b. If the wireless unit is moving rapidly and requires numerous handoffs in the micro-cellular network 14b, the wireless unit can be placed on the macro-cellular network or macro-cell layer 14a.

The inter-layer handoff system monitors and/or responds to the duration of a wireless unit in a cell or set of cells of a first layer and/or the time intervals between certain changes in the cell or set of cells servicing the wireless unit. Wireless units that spend a long time within the cell(s) of the first layer can be presumed to be at a slower speed. If so, the an inter-cell layer handoff can be performed to direct the wireless unit to an upper cell layer of smaller-sized cells, such as the micro-cell layer 14b or the pico-cell layer 14c depending on embodiment and/or whether the wireless unit is in the macro-cell layer 14a or the micro-cell layer 14b prior to the inter-layer handoff. Wireless units that spend a short time within the cell(s) of the first layer can be presumed to be at a higher speed, and the hierarchical cellular system performs an inter-cell handoff to a lower cell layer of larger-sized cells, such as the micro-cell layer 14b or the macro-cell layer 14a depending on the embodiment and/or whether the wireless unit is in the micro-cell layer 14b or the pico-cell layer 14c prior to the inter-layer handoff. Depending on the embodiment, the inter-layer handoff system could have multiple threshold levels which could enable an inter-layer handoff between the macro layer 14a and the pico-cell layer 14c.

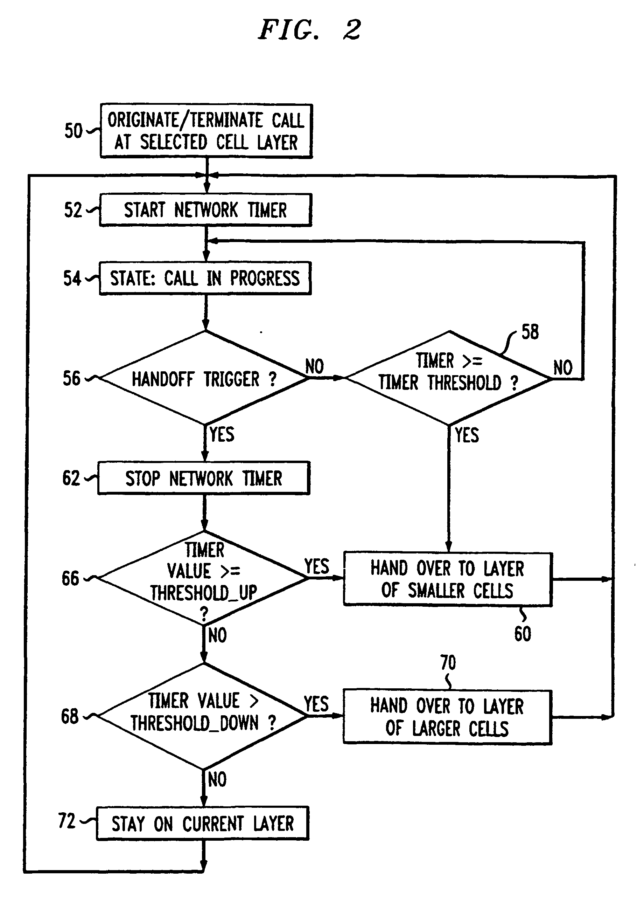

FIG. 2 shows a general flow diagram of an embodiment of the inter-layer handoff system or portion thereof which could be used to direct a wireless unit in a first cell layer, such as the micro-cell layer 14b in the hierarchical cellular system described in FIG. 1, to a second cell layer. Different embodiments of the inter-layer handoff system can be used for different layers in a hierarchical cellular system of at least two layers making different handoff determination for each layer and/or using additional threshold(s), different thresholds or manners of determining timer values. A wireless unit originates or terminates a call at block 50 using a cell of a selected cell layer. The selected cell layer can be chosen at random (for example, with weightings appropriate to the proportions of the various speeds), the least loaded layer, the lowest layer (such as the macro layer 14a in FIG. 1), any intermediate layer(s) (such as the micro-cell layer 14b of FIG. 1), the highest layer (such as the pico-cell layer 14c of FIG. 1), or as mentioned above based on the particular wireless unit (for example due to layer usage history or a decision made at subscription) or on the geographic service area. Depending on the multiple access system used by the hierarchical cellular system, the origination/termination of a call through the cell of the selected cell layer would proceed as performed by a conventional cellular system with any additional system or wireless unit processing to avoid selection of base stations in other or certain cell layers as would be understood by one of skill in the art.

Once the wireless unit originates/terminates a call (establishes a connection with cell of selected cell layer) through the hierarchical cellular system, a network timer is started at block 52. The timer measures the duration of the call through the current cell of the selected layer In the case of spread spectrum or CDMA systems, such as IS-95, cdma2000, Universal Mobile Telecommunications Service (UMTS), this could correspond to a current set of cells in the active set for the selected cell layer and/or in a different cell layer(s) with which the wireless unit is in soft hand-off Alternatively, the timer or timer(s) corresponding to particular cell(s) or a set of cell(s) can start when all, a majority or any of cells which are in the active set and/or in the selected or current cell layer are replaced by new cell(s) in the active set and/or in the selected or current cell layer. At block 54, the call progresses until the inter-layer handoff system determines at block 56 if a intra-layer handoff trigger has occurred. Depending on the embodiment, an intra-layer hand-off trigger can occur when a hard handoff to a different base station occurs or is to occur. Alternatively, depending on the embodiment, a handoff trigger for the purposes of the inter-layer handoff system can occur when the active set and/or all, a majority or any cells in the selected or current cell layer changes or is to change, for example when the entire active set (or other sets), a majority of the active set (or other sets) or any portion of the active set (or other sets) changes. Depending on the embodiment, the active set (or other sets) can include base stations in different or only the same cell layer.

If no handoff trigger occurs, the inter-layer handoff system determines at block 58 if the timer is greater than a timer threshold level, such as threshold_up, for the current layer. If not, the call progresses in block 54. If so, the wireless unit has not been handed off for a period of time which the system has determined should trigger an inter-layer handoff at block 60 to a layer of smaller cells. For example, depending on the embodiment and/or whether the current or selected cell layer is the macro-cell layer 14a (FIG. 1) or the micro-cell layer 14b, the inter-layer handoff system hands off the wireless unit to the micro-cell layer 14b (FIG. 1) or pico-cell layer 14c (FIG. 1). After the inter-layer handoff, the network timer is restarted at block 52. If the wireless unit is currently in the uppermost layer, such as the pico-cell layer 14c, the wireless unit remains in the uppermost layer.

If, at block 56, the inter-layer handoff system determines the occurrence of a handoff trigger, the timer is stopped at block 62 and the timer value is compared to a first threshold value, such as threshold_up, at block 66 for the current layer. If the timer is greater than or equal to the first threshold value, the wireless unit is moving and has been in the cell for a period of time which the system has determined should trigger an interlayer handoff at block 60 to a layer of smaller-sized cells. For example, depending on the embodiment and/or whether the current cell layer is the macro-cell layer 14a (FIG 1) or the micro-cell layer 14b, the inter-layer handoff system hands off the wireless unit to the micro-cell layer 14b (FIG. 1) or pico-cell layer 14c (FIG. 1). After the inter-layer handoff, the network timer is restarted at block 52. If the wireless unit is currently in the uppermost layer, such as the pico-cell layer 14c, the wireless unit must remain in the uppermost layer. In this embodiment, the decision block 66 may be redundant with block 58 if the timer threshold level is the same as the first threshold value and/or the timer and timer values are determined in the same way. As such, depending on the embodiment, the block 66 can be removed, and the block 62 could proceed to block 68.

If the timer value is less than the first threshold value (or after a handoff trigger at block 56 without the timer threshold being triggered at 58 depending on the embodiment), the inter-layer handoff system compares the timer value to a second threshold, such as threshold_down, for the current cell layer at block 68. If the timer value is less than the second threshold, the wireless unit is moving rapidly and handing off between the cells of the current layer at too fast a rate. Accordingly, the inter-layer handoff system triggers an interlayer handoff at block 70 to a lower layer of larger-sized cells. For example, depending on the embodiment and/or whether the current cell layer is the pico-cell layer 14c (FIG. 1) or the micro-cell layer 14b, the inter-layer handoff system hands off the wireless unit to the micro-cell layer 14b (FIG. 1) or the macro-cell layer 14a (FIG. 1). If the wireless unit is currently in the lowest layer, such as the macro-cell layer 14a, the wireless unit must remain in the lowest layer. After the inter-layer handoff, the network timer is restarted at block 52.

If the timer value is greater than or equal to the second threshold, the wireless unit is moving at a rate at which the wireless unit is handing off between the cells of the current layer at an acceptable rate. Accordingly, the inter-layer handoff system maintains the wireless unit in the current layer at block 72 The timer value can be the amount of time that the wireless unit is served by a cell in the first layer before being handed off to another cell in the first layer, and the timer value is compared to threshold values after each handoff trigger. However, the timer value compared to the thresholds at the blocks 66 and 68 could be timer values calculated as a function of previous amounts of time between intra-layer handoffs for the wireless unit, for example an average or weighted average of measured amounts of time between intra-layer handoffs over several intra-layer handoffs or previous timer events or using Infinite Impulse Response (IIR) filtering After such information is obtained, the system makes a decision depending on its timer value(s) reflecting wireless unit activity in previous cells either to redirect the wireless unit to a more appropriate layer or to stay in the current layer.

As mentioned above, the timer values can be calculated as a function of previous timer values over a number of intra-layer handoffs. As such, the timer value used in making the inter-layer handoff determination at blocks 66 and 68 can be calculated or updated after each intra-layer handoff or after a number of intra-layer handoffs. The inter-layer handoff determination at blocks 66 and 68 can also be made after each handoff trigger and/or after a number of intra-layer handoffs depending on the embodiment. If no intra-layer handoff occurs while the timer threshold level is exceeded at block 58, the inter-layer handoff system can perform an inter-layer handoff to a layer of smaller-sized cells.

Thus, the inter-layer handoff system for a hierarchical cell system provides increased capacity by directing handoffs to the smaller sized cells in upper layers of the hierarchical cell system when the wireless unit is not being handed off with enough frequency within cells of a current cell layer, for example when travelling at a slow speed. When the wireless unit is being handed off at a high rate with the cells of a current layer, for example when the wireless unit is travelling at high speed, the inter-layer handoff system can handoff the wireless unit to a layer of larger sized cells to reduce the number of intra-layer handoffs for the wireless unit. In the embodiment described above, the larger cells are described as being in lower layers and the smaller sized cells are described in upper layers, but other terminology could be used where upper layers are described as having the larger size cells and lower layers are described as having smaller size cells.

In addition to the embodiments described above, the inter-layer hand-off system for a hierarchical cellular system can be used with different cellular systems and configurations which omit and/or add components and/or use variations or portions of the described system or current cellular systems. For example, once the inter-layer handoff system determines that an interlayer handoff is to be performed for a wireless unit. The inter-layer handoff can be performed similar to an inter-system handoff as described in the standard identified as TIA/EIA-41-D entitled "Cellular Radiotelecommunications Intersystem Operations," December 1997 ("IS-41") or evolutions thereof and/or as an intra-system handoff as described in the time division multiple access system (TDMA) standard known as IS-136, the code division multiple access (CDMA) standard known as IS-95 or third generation (3G) evolutions thereof or the Global System for Mobiles (GSM) network as defined by the European Telecommunications Standard Institute (ETSI) or Universal Mobile Telecommunications Service (UMTS) evolutions thereof. Different ways of performing the inter-layer handoffs are possible as would be understood by one of ordinary skill in the art. Moreover, an embodiment of the inter-layer handoff system has been described with reference to a spread spectrum, such as a CDMA or UMTS system, for the layers of the hierarchical cell system. Different multiple access systems, such as FDMA, TDMA CDMA or GSM, or different communications systems or evolutions thereof are possible for the different layers. For example, a lower layer could operate with a TDMA or CDMA system while an upper layer could operate with a 3G evolution thereof, or a lower layer could operate using a GSM system while an upper layer uses a UMTS evolution thereof.

It should be understood that different notations, references and characterizations of the various architecture blocks can be used. For example, the inter-layer handoff system can be used in a hierarchical cellular system having a plurality of cell layers of different size cells between layers. The inter-layer handoff system or portions thereof can be performed at the wireless unit, the base station(s), the base station controller(s), the MSC(s), the HLR(s), a visitor location register (VLR), an authentication center (AC) or other subsystem of the hierarchical cellular system. Additionally, an embodiment of the inter-layer handoff system has been described with respect to a current layer for the wireless unit within the hierarchical cellular system. Depending on the embodiment, the wireless unit could be in soft handoff with cells of different cell layers. Different timer and/or timer values can be used which correspond to the different base stations (cells) and/or cell layers. Timer(s) and/or timer value(s) corresponding to selected cell layer(s) could be used to determine inter-layer handoffs to cell(s) of another cell layer from at least the cell(s) of the selected layer(s) while base stations(s) in different cell layer(s) can remain in the active set or not.

In the embodiment described above, the determination as to whether an inter-layer handoff is to be performed is made at each intra-layer handoff. Depending on the embodiment, the inter-layer handoff system can make an inter-layer handoff determination after one or a number of intra-layer handoff based on the timer or timer values The timer or timer values can be a function of the amount of time the wireless unit is serviced by a cell(s) in a cell layer before being handed off to different cell(s) in the cell layer, such as averages, weighted averages or as a function of timer values over a number of intra-layer handoffs. The timer or timer value can be the amount of time being serviced by current cell(s) in a current or selected cell layer(s). In certain embodiments, timer refers to the amount of time being serviced by a current cell(s), and timer values refers to functions of the amount of time the wireless unit is serviced by a current cell(s) which includes the amount of time the wireless unit is serviced by a current cell(s).

The inter-layer handoff system can use different threshold value(s) for the different layers, and the described flow diagram can be different for different layers, and/or the inter-layer handoff system could use an indication of the current layer for the wireless unit each time a determination is made as to whether a inter-layer handoff should be made. Accordingly, depending on the embodiment for the inter-layer handoff system, the determination of the timer and/or other values, the threshold(s) being used and the determination whether to perform an inter-layer handoff can change depending on the cell layer(s) as would be understood by one of ordinary skill in the art with the benefit of this disclosure. It should be understood that the inter-layer handoff system and portions thereof can be implemented in processing circuitry such as application specific integrated circuits, software-driven processing circuitry, programmable logic devices, firmware, hardware or other arrangements of discrete components as would be understood by one of ordinary skill in the art with the benefit of this disclosure. What has been described is merely illustrative of the application of the principles of the present invention. Those skilled in the art will readily recognize that these and various other modifications, arrangements and methods can be made to the present invention without strictly following the exemplary applications illustrated and described herein and without departing from the scope of the present invention as defined by the accompanying claims.

## Claims

1. A method of communicating in a hierarchical cellular system having an inter-layer handoff system, the method includes determining a timer value which is a function of the duration that a wireless unit operates within at least a cell of a first layer (52, 54), said method being **CHARACTERIZED BY** the steps of:
using said timer value in determining whether said wireless unit is to be handed off to at least a cell of a second layer (58),
wherein the step of using comprises a further step of comparing said timer value to a first threshold (66) and a further step of handing off to a layer of smaller cells if said timer value is greater than said first threshold (60), and the step of comparing said timer value to a second threshold (68) and the step of handing off to a layer of larger cells if said timer value is less than said second threshold (70), and
wherein the step of determining said timer value and said handing off is performed by the inter-layer handoff system other than the wireless unit.

2. A method as claimed in claim 1 wherein said step of determining comprises:
starting said network timer (52) as said wireless unit operates within a first cell of said first layer; and
stopping said network timer (62) after a trigger is detected for handing off said wireless unit to a second cell of said first layer.

3. A method as claimed in claim 1 wherein said step of determining comprises determining an amount of time said wireless unit is within a first cell of said first layer (52, 54, 56) before being handed off to a second cell of said first layer

4. A method as claimed in claim 3 wherein said step of determining comprises using said amount of time said wireless unit is within said first cell as said timer value (52, 62).

5. A method as claimed in claim 3 wherein said step of determining comprises determining said timer value as a function of said amount of time said wireless unit is within said first cell (52. 62).

6. A method as claimed in claim 5 wherein said step of determining comprises determining said timer value as a function of amounts of time said wireless unit is within cells of said first layer.

7. A method as claimed in claim 1 wherein said step of using comprises:
comparing said timer value to a first threshold (66); and
handing off said wireless unit to a second layer depending on said comparison (60, 70).

8. A method as claimed in claim 1 comprising determining an initial layer for said wireless unit based upon a traffic load of said first and second layers.

9. A method as claimed in claim 1 comprising determining an initial layer for said wireless unit based upon previous traffic usage for said wireless unit.

10. An inter-layer handoff system for communicating in a hierarchical cellular system, the inter-layer system determines a timer value which is a function of the duration that a wireless unit operates within at least a cell of a first layer of said hierarchical cellular system, said system being **CHARACTERIZED BY**:
processing circuitry configured to use said timer value in determining whether said wireless unit is to be handed off to at least a cell of a second layer,
wherein the processing circuitry is configured to compare said timer value to a first threshold (66) and hand off to a layer of smaller cells if said timer value is greater than said first threshold (60), and compare said timer value to a second threshold (68) and hand off to a layer of larger cells if said timer value is less than said second threshold (70), and
wherein the determination of said timer value and said handing off is performed by the inter-layer handoff system other than the wireless unit.

## Patentansprüche

1. Verfahren zum Kommunizieren in einem hierarchischen Zellularsystem mit einem System zur Weiterschaltung zwischen Schichten, mit dem Bestimmen eines Zeitgeberwerts, der eine Funktion der Zeitdauer ist, für die eine drahtlose Einheit in mindestens einer Zelle einer ersten Schicht (52, 54) betrieben wird, **gekennzeichnet durch** folgende Schritte:
Benutzen des Zeitgeberwerts bei der Bestimmung, ob die drahtlose Einheit zu mindestens einer Zelle einer zweiten Schicht (58) weitergeschaltet werden soll,
wobei der Schritt des Benutzens einen weiteren Schritt des Vergleichens des Zeitgeberwerts mit einem ersten Schwellwert (66) und einen weiteren Schritt des Weiterschaltens zu einer Schicht kleinerer Zellen umfaßt, wenn der Zeitgeberwert größer als der erste Schwellwert (60) ist und den Schritt des Vergleichens des Zeitgeberwerts mit einem zweiten Schwellwert (68) und den Schritt des Weiterschaltens zu einer Schicht größerer Zellen, wenn der Zeitgeberwert geringer als der zweite Schwellwert ist (70), und
wobei der Schritt des Bestimmens des Zeitgeberwerts und der Weiterschaltung **durch** das System zur Weiterschaltung zwischen Schichten außer der drahtlosen Einheit durchgeführt werden.

2. Verfahren nach Anspruch 1, wobei der Schritt des Bestimmens folgendes umfaßt:
Starten des Netzzeitgebers (52), wenn die drahtlose Einheit in einer ersten Zelle der ersten Schicht betrieben wird; und
Anhalten des Netzzeitgebers (62) nachdem ein Trigger zur Weiterschaltung der drahtlosen Einheit zu einer zweiten Einheit der ersten Schicht erkannt worden ist.

3. Verfahren nach Anspruch 1, wobei der Schritt des Bestimmens das Bestimmen einer Zeitdauer umfaßt, für die sich die drahtlose Einheit in einer ersten Zelle einer ersten Schicht (52, 54, 56) befindet, ehe sie zu einer zweiten Zelle der ersten Schicht weitergeschaltet wird.

4. Verfahren nach Anspruch 3, wobei der Schritt des Bestimmens das Benutzen der Zeitdauer, für die sich die drahtlose Einheit in der ersten Zelle befindet, als den Zeitgeberwert (52, 62) umfaßt.

5. Verfahren nach Anspruch 3, wobei der Schritt des Bestimmens das Bestimmen des Zeitgeberwerts als Funktion der Zeitdauer umfaßt, für die sich die drahtlose Einheit in der ersten Zelle (52, 62) befindet.

6. Verfahren nach Anspruch 5, wobei der Schritt des Bestimmens das Bestimmen des Zeitgeberwerts als Funktion der Zeitdauer umfaßt, für die sich die drahtlose Einheit in Zellen der ersten Schicht befindet.

7. Verfahren nach Anspruch 1, wobei der Schritt des Benutzens folgendes umfaßt:
Vergleichen des Zeitgeberwerts mit einem ersten Schwellwert (66); und
Weiterschalten der drahtlosen Einheit einer zweiten Schicht in Abhängigkeit von dem Vergleich (60, 70).

8. Verfahren nach Anspruch 1 mit Bestimmen einer Anfangsschicht für die drahtlose Einheit auf Grundlage eines Verkehrsaufkommens der ersten und zweiten Schichten.

9. Verfahren nach Anspruch 1 mit Bestimmen einer Anfangsschicht für die drahtlose Einheit auf Grundlage vorheriger Verkehrsnutzung für die drahtlose Einheit.

10. System zur Weiterschaltung zwischen Schichten zum Kommunizieren in einem hierarchischen Zellularsystem, wobei das Zwischenschichtsystem einen Zeitgeberwert bestimmt, der eine Funktion der Zeitdauer ist, für die eine drahtlose Einheit in mindestens einer Zelle einer ersten Schicht des hierarchischen Zellularsystems betrieben wird, **gekennzeichnet durch** folgendes:
Bearbeitungsschaltungen zur Verwendung des Zeitgeberwerts bei der Bestimmung, ob die drahtlose Einheit zu mindestens einer Zelle einer zweiten Schicht weitergeschaltet werden soll,
wobei die Verarbeitungsschaltungen den Zeitgeberwert mit einem ersten Schwellwert (66) vergleichen und zu einer Schicht kleinerer Zellen weiterschalten können, wenn der Zeitgeberwert größer als der erste Schwellwert (60) ist, und den Zeitgeberwert mit einem zweiten Schwellwert (68) vergleichen und zu einer Schicht größerer Zellen weiterschalten können, wenn der Zeitgeberwert geringer als der zweite Schwellwert ist (70), und
wobei die Bestimmung des Zeitgeberwerts und die Weiterschaltung **durch** das System zur Weiterschaltung zwischen Schichten außer der drahtlosen Einheit durchgeführt wird.

## Revendications

1. Procédé de communication dans un système cellulaire hiérarchique ayant un système de transfert inter-couches, le procédé comporte la détermination une valeur de temporisation qui est fonction de la durée de fonctionnement d'une unité sans fil dans au moins une cellule d'une première couche (52, 54), ledit procédé étant **CARACTERISE PAR** les étapes consistant à :
utiliser ladite valeur de temporisation dans la détermination du transfert ou non de ladite unité sans fil à au moins une cellule d'une deuxième couche (58),
dans lequel l'étape d'utilisation comprend une autre étape consistant à comparer ladite valeur de temporisation à un premier seuil (66) et une autre étape consistant à transférer à une couche de cellules plus petites si ladite valeur de temporisation est supérieure audit premier seuil (60), et l'étape consistant à comparer ladite valeur de temporisation à un deuxième seuil (68) et l'étape consistant à transférer à une couche de cellules plus grandes si ladite valeur de temporisation est inférieure audit deuxième seuil (70), et
dans lequel l'étape de détermination de ladite valeur de temporisation et dudit transfert est exécutée par le système de transfert inter-couches autre que l'unité sans fil.

2. Procédé selon la revendication 1, dans lequel ladite étape de détermination comprend :
le lancement de ladite temporisation de réseau (52) lorsque ladite unité sans fil fonctionne dans une première cellule de ladite première couche ; et
l'arrêt de ladite temporisation de réseau (62) après qu'un déclenchement est détecté pour le transfert de ladite unité sans fil à une deuxième cellule de ladite première couche.

3. Procédé selon la revendication 1, dans lequel ladite étape de détermination comprend la détermination d'une quantité de temps de séjour de ladite unité sans fil dans une première cellule de ladite première couche (52, 54, 56) avant son transfert à une deuxième cellule de ladite première couche.

4. Procédé selon la revendication 3, dans lequel ladite étape de détermination comprend l'utilisation de ladite quantité de temps de séjour de ladite unité sans fil dans ladite première cellule comme dite valeur de temporisation (52, 62).

5. Procédé selon la revendication 3, dans lequel ladite étape de détermination comprend la détermination de ladite valeur de temporisation en fonction de ladite quantité de temps de séjour de ladite unité sans fil dans ladite première cellule (52, 62).

6. Procédé selon la revendication 5, dans lequel ladite étape de détermination comprend la détermination de ladite valeur de temporisation en fonction de quantités de temps de séjour de ladite unité sans fil dans des cellules de ladite première couche.

7. Procédé selon la revendication 1, dans lequel ladite étape d'utilisation comprend :
la comparaison de ladite valeur de temporisation à un premier seuil (66) ; et
le transfert de ladite unité sans fil à une deuxième couche en fonction de ladite comparaison (60, 70).

8. Procédé selon la revendication 1, comprenant la détermination d'une couche initiale de ladite unité sans fil basée sur une charge de trafic desdites première et deuxième couches.

9. Procédé selon la revendication 1, comprenant la détermination d'une couche initiale de ladite unité sans fil basée sur le type de trafic antérieur de ladite unité sans fil.

10. Système de transfert inter-couches pour communiquer dans un système cellulaire hiérarchique, le système inter-couches détermine une valeur de temporisation qui est fonction de la durée de fonctionnement d'une unité sans fil dans au moins une cellule d'une première couche dudit système cellulaire hiérarchique, ledit système étant **CARACTERISE PAR** :
des circuits de traitement configurés pour utiliser ladite valeur de temporisation dans la détermination du transfert ou non de ladite unité sans fil à au moins une cellule d'une deuxième couche,
dans lequel les circuits de traitement sont configurés pour comparer ladite valeur de temporisation à un premier seuil (66) et transférer à une couche de cellules plus petites si ladite valeur de temporisation est supérieure audit premier seuil (60), et pour comparer ladite valeur de temporisation à un deuxième seuil (68) et transférer à une couche de cellules plus grandes si ladite valeur de temporisation est inférieure audit deuxième seuil (70), et
dans lequel la détermination de ladite valeur de temporisation et dudit transfert est exécutée par le système de transfert inter-couches autre que l'unité sans fil.
